# EUROPEAN PATENT APPLICATION

(11) **EP 4 164 264 A1**
(43) Date of publication of application: **12.04.2023**
(21) Application number: 21201708.1
(22) Date of filing: 08.10.2021
(51) Int. Cl.: H04W 8/22, H04W 88/18, H04W 8/20, H04W 76/19, H04L 41/0604

(54) **NETWORK CONFIGURATION PARAMETER UPDATE**

(71) Applicant: Nokia Technologies Oy, 02610 Espoo (FI)
(72) Inventor: HIETALAHTI, Hannu, 90620 Oulu (FI); WIEHE, Ulrich, 36251 Bad Hersfeld (DE)
(74) Representative: TBK

(57) **Abstract**

An apparatus, in a subscriber data unit, is provided, wherein the apparatus comprises means for supplying at least one user equipment related configuration value to a subscriber mobility control unit, and means for supplying at least one network configuration parameter to the subscriber mobility control unit, wherein the at least one network configuration parameter is applied for manipulating the at least one user equipment related configuration value.

## Description

### Technical Field

Various example embodiments described herein relate to an apparatus, a method and a computer program product for carrying out a network configuration parameter update.

### Background

The following meanings for the abbreviations used in this specification apply:
- 5GS AF: Application Function
- AMF: Access and Mobility Management Function
- AS: Application Server
- CN: Core Network
- EPS: Evolved Packet System
- HSS: Home Subscriber Server
- N8: Reference point between UDM and AMF
- MME: Mobility Management Entity
- NAS: Non Access Stratum
- NEF: Network Exposure Function
- SCEF: Service Capability Exposure Function
- NRF: Network Repository Function
- RAT: Radio Access Technology
- UDM: Unified Data Management
- UE: User Equipment

In the context of network configuration parameter provisioning, such as that between different control entities in a network, situations may arise in which adjusted values may be provided by one control entity to another in order to replace those originally conveyed. If both the originally conveyed values and adjusted values have validity periods associated therewith, the management of such values can become over-burdening under certain conditions. An efficient mechanism for providing network configuration parameter updates is therefore desired.

### Summary

Example embodiments aim to improve handling of network configuration parameter updates.

According to a first aspect, an apparatus, in a subscriber data unit, is provided, wherein the apparatus comprises
means for supplying at least one user equipment related configuration value to a subscriber mobility control unit, and
means for supplying at least one network configuration parameter to the subscriber mobility control unit, wherein the at least one network configuration parameter is applied for manipulating the at least one user equipment related configuration value.

According to a second aspect, a method, in a subscriber data unit, is provided, the method comprising:
supplying at least one user equipment related configuration value to a subscriber mobility control unit, and
supplying at least one network configuration parameter to the subscriber mobility control unit, wherein the at least one network configuration parameter is applied for manipulating the at least one user equipment related configuration value.

The first and second aspects may be modified as follows:
It may be determined whether the subscriber mobility control unit is capable of manipulating the at least one user equipment related configuration value, and the at least one network configuration parameter may be supplied to the subscriber mobility control unit in case it is determined that the subscriber mobility control unit is capable of manipulating the at least one user equipment related configuration value.

The at least one user equipment related configuration value may be manipulated based on the at least one network configuration parameter, in case it is determined that the subscriber mobility control unit is not capable of manipulating the at least one user equipment related configuration value, the manipulated at least one user equipment related configuration value may be sent to the subscriber mobility control unit, and, after expiry of a validity period for the at least one network control parameter, an updated value of the at least one user equipment related configuration value may be sent to the subscriber mobility control unit.

It may be determined whether the subscriber mobility control unit is capable of manipulating the at least one user equipment related configuration value by referring to configuration information received from the subscriber mobility control unit.

The at least one user equipment related configuration value may comprise at least one non access stratum parameter.

The at least one user equipment related configuration value may comprise at least one non access stratum timer.

The at least one user equipment related configuration value may comprise an active time and /or a periodic registration update timer.

The at least one network configuration parameter may comprise a maximum response time and/or a maximum latency.

According to a third aspect, an apparatus, in a subscriber mobility control unit, is provided, the apparatus comprising:
means for receiving at least one user equipment related configuration value from a subscriber data unit,
means for receiving at least one network configuration parameter from the subscriber data unit, and
means for manipulating the at least one user equipment related configuration value based on the at least one network configuration parameter.

According to a fourth aspect, a method, in a subscriber mobility control unit, is provided, the method comprising:
receiving at least one user equipment related configuration value from a subscriber data unit,
receiving at least one network configuration parameter from the subscriber data unit, and
manipulating the at least one user equipment related configuration value based on the at least one network configuration parameter.

The third and fourth aspects may be modified as follows:
The at least one user equipment related configuration value may be manipulated without using the received at least one network configuration parameter after expiry of the validity period.

The at least one user equipment related configuration value may comprise at least one non access stratum parameter.

The at least one user equipment related configuration value may comprise at least one non access stratum timer.

The at least one user equipment related configuration value may comprise an active time and /or a periodic registration update timer.

The at least one network configuration parameter may comprise a maximum response time and/or a maximum latency.

According to a fifth aspect, a computer program product is provided, which comprises code means for performing a method according to any one of the second and fourth aspects or their modifications when run on a processing means or module. The computer program product may be embodied on a computer-readable medium, and/or the computer program product may be directly loadable into the internal memory of the computer and/or transmittable via a network by means of at least one of upload, download and push procedures.

### Brief Description of the Drawings

These and other objects, features, details and advantages will become more fully apparent from the following detailed description of example embodiments, which is to be taken in conjunction with the appended drawings, in which:
Fig. 1A shows a UDM 1 according to an example embodiment,
Fig. 1B shows a process carried out by the UDM 1 according to the example embodiment,
Fig. 2A shows an AMF 2 according to an example embodiment,
Fig. 2B shows a process carried out by the AMF 2 according to the example embodiment,
Fig. 3 shows a process carried out by the UDM 1 according to a further example embodiment,
Fig. 4 shows a process carried out by the AMF 2 according to the further example embodiment,
Fig. 5 shows a UDM service operations information flow,
Fig. 6 shows an NEF service operations information flow,
Fig. 7 shows a specific NEF service operations information flow, and
Fig. 8 shows an NEF service operations information flow.

### Detailed Description

In the following, description will be made to example embodiments. It is to be understood, however, that the description is given by way of example only, and that the described example embodiments are by no means to be understood as limiting.

Example embodiments, although not limited to this, relate to providing network configuration parameters between different control entities in a network.

Before describing example embodiments, in the following, problems (which are not necessarily exhaustive in nature) addressed by example embodiments are discussed in some more detail.

For example, it is possible for an Application Function (AF) or Application Server (AS) inside or outside of 3GPP network to provision so-called Network Configuration parameters for a subscriber accessing the 3GPP network via UE. These Network Configuration parameters are specified in 3GPP TS 23.502 and they can be used by the network to fine tune the UE's NAS protocol parameters that are negotiated between the AMF and the UE or assigned by the AMF to the UE, such as timer settings based on the provisioned Network Configuration parameters. This allows an AS / AF that is aware of certain application needs of the target UE to provision educated guesses of the foreseen UE behaviour to 3GPP network so that the NAS timers could be optimised for the service requirements.

These Network Configuration parameters can be provisioned via SCEF (EPS) or NEF (5GS) to the HSS/UDM. This Network Configuration parameter provisioning can take place in a standalone parameter provisioning procedure or be included in monitoring request.

Following the principles specified in TS 23.682 for EPS and in TS 23.502 for 5GS, the HSS and the UDM are responsible for interpreting the Network Configuration parameters that are received from the AS/AF (via SCEF/NEF) and for adjusting the Subscribed Active Time and Subscribed Periodic Registration Update Timer accordingly. The adjusted values are then sent by the HSS to the MME (EPS) and by the UDM to the AMF (5GS) to replace the original values conveyed during MME/AMF registration.

As mentioned above, the HSS/UDM is responsible for interpreting the Network Configuration parameters that are received from the AS/AF (via SCEF/NEF) and for adjusting the Subscribed Active Time and Subscribed Periodic Registration Update Timer accordingly. The adjusted values are then sent by the HSS to the MME (EPS) and by the UDM to the AMF (5GS) to replace the original values conveyed during MME/AMF registration.

The provisioned Network Configuration parameters can have a validity period, after which they expire and the normal un-adjusted default behaviour must be resumed by conveying the original values from HSS/UDM to MME/AMF where they replace the adjusted values. One source of the un-adjusted default values is the subscriber data stored in the UDM, which includes default values for Active Time and Periodic Registration Update Timer value. The AMF takes these subscribed values along with other NAS protocol and AMF local configuration related conditions into account when determining the value of the Active Time value and the Periodic Registration Update Timer value that the AMF sends to the UE during NAS signalling procedure.

When the provisioned Network Configuration parameter expires, the AMF is not aware of the real operator-configured Subscribed Active Time or the operator-configured Subscribed Periodic Registration Update Timer in the user's subscriber data, since the UDM only sent the timer values that were modified according to the externally provisioned Network Configuration parameters received from the AS/AF.

Consequently, the UDM must always update the serving AMF with new Subscribed Active Time and Subscribed Periodic Registration Update Timer values both when Network Configuration parameter provisioning starts and when it ends. For a single UE, this is manageable, but for large group of target UEs, this can generate signalling storms at N8 between the UDM and the AMF.

If the AF/AS included validity period in its subscription to Monitoring Events towards the NEF/SCEF, the AMF knows the validity period of adjusted UE NAS configuration parameters (Active Time or Periodic Registration Update Timer) as the validity time is included in the information the AMF received from the UDM. But since the UDM already did the modification of some of the parameters (Subscribed Active Time and Subscribed Periodic Registration Update Timer), the AMF can't know the un-adjusted subscribed timer values. Consequently, the UDM must update all affected AMFs for all affected UEs in the group. And it must do that update round at the same time when the provisioned Network Configuration parameters expire. This puts an unnecessarily heavy load on N8 between the UDM and the AMF.

One specific problem is that the UDM is doing the NAS parameter adaptation on behalf of the AMF (MME) that has the main responsibility for those NAS parameters. A proposal to move the control of AMF-owned NAS parameters from the UDM to the AMF is thus disclosed.

According to relevant standards, stage 2 architecture requirements for 5GS monitoring with the option to provision Network Configuration parameters are specified in TS 23.502 clause 4.15.3.2.2. and 4.15.3.2.3. Standalone parameter provisioning is specified in the same TS in clause 4.15.6. The corresponding EPS call flows follow logically similar principle and are specified in TS 23.682.

The provisioned Network Configuration parameters are specified in TS 23.502 clause 4.15.6.3a as follows. The ones that are taken as examples in some embodiments described herein are Maximum Response Time (that can adjust the Active Time that is negotiated with the UE) and Maximum Latency (that is used to adjust the Periodic Registration Update Timer that is negotiated with the UE).

**Table 4.15.6.3a-1: Description of Network Configuration parameters**

| Network Configuration parameter | Description |
|---|---|
| Maximum Response Time | Identifies the time for which the UE stays reachable to allow the AF to reliably deliver the required downlink data. [optional] |
| Maximum Latency | Identifies maximum delay acceptable for downlink data transfers. Example: in order of 1 minute to multiple hours. [optional] |
| Suggested Number of Downlink Packets | Identifies the number of packets that the core network is suggested to buffer if the UE is not reachable. Example: 5 packets. [optional] |

In the following, different parameters and values as used herein are shortly defined.

UE's NAS protocol parameters (also referred to as NAS parameters) are parameters that the CN negotiates with the UE or assigns to the UE over NAS signalling procedure, such as Active Time and Periodic Registration Update Time.

Subscription data are subscription related data that the operator stores in the UDM/UDR. Subscription data includes all subscription configuration data, such as access rights to different RAT Types, 4G or 5G access rights, subscription security information, subscribed services, UE status information and any possible configuration data that is used for selecting appropriate protocol parameters, such as UE's NAS protocol parameters. Also monitoring configuration that has been set up as the consequence of subscription to monitoring event notifications is stored in the subscription data.

Subscription parameters refer to the AF subscribing to a monitoring event and include Maximum Latency or Maximum Response Time or both. So, in this context, it means the parameters that were included by the subscribing AF when it sent the monitoring request (=subscription) to the UDM via the NEF. Validity period encoded as monitoring duration is included among these subscription parameters and that monitoring duration informs all 3GPP NFs how long the subscription to receive monitoring event notifications is valid.

Example embodiments are directed to provide an improved handling of network configuration parameter updates.

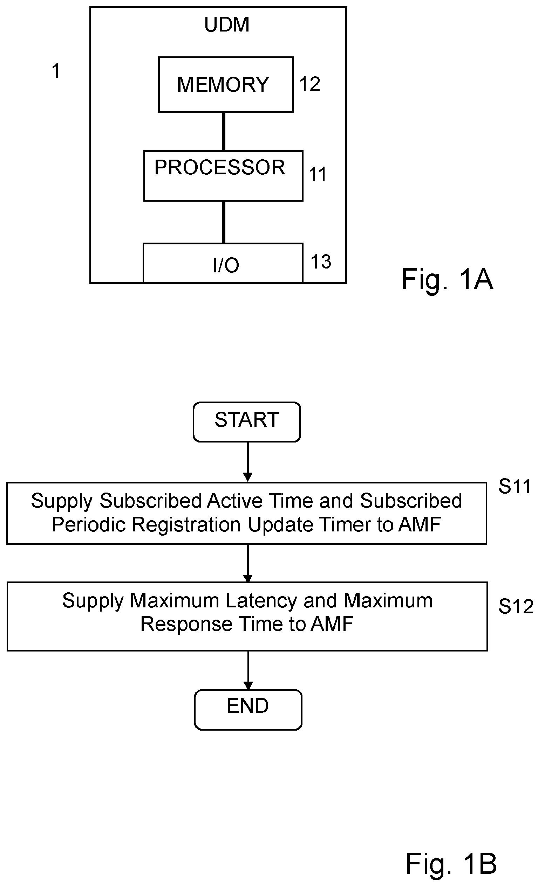

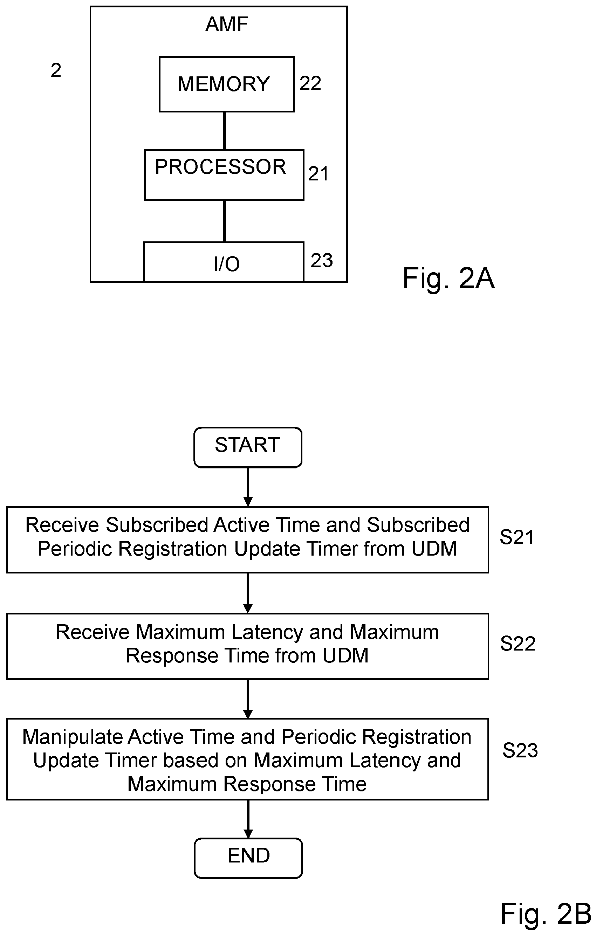

In the following, a general overview of some example embodiments is described by referring to Figs. 1A, 1B, 2A and 2B.

Fig. 1A shows a UDM 1 according to the present example embodiment. The UDM 1 is an example of a first apparatus. The first apparatus can be a part of an UDM or similar, or an apparatus which carries out the function of an UDM, besides other functions. A procedure carried out by the UDM 1 is illustrated in Fig. 1B. Fig. 2A shows an AMF 2 according to the present example embodiment. The AMF 2 is an example of a second apparatus, wherein the second apparatus can be a part of an AMF or similar, or an apparatus which carries out the function of an UDM, besides other functions. Fig. 2B shows a procedure carried out by the AMF 2. It is noted that UDM and AMF are example for an application in 5GS. However, in EPS, UDM is replaced by HSS, and AMF is replaced by MME.

The UDM 1 shown in Fig. 1A includes at least one processor 11 and at least one memory 12 including computer program code. The at least one processor 11, with the at least one memory 12 and the computer program code, is configured to cause the apparatus to perform: supplying at least one user equipment related configuration value (e.g., Subscribed Active Time and/or Subscribed Periodic Registration Update Timer) to a subscriber mobility control unit (e.g., AMF 2) (S11 in Fig. 1B), and supplying at least one network configuration parameter to the subscriber mobility control unit, wherein the at least one network configuration parameter is applied for manipulating the at least one user equipment related configuration value (S12 in Fig. 1B).

The AMF 2 shown in Fig. 2A includes at least one processor 21 and at least one memory 22 including computer program code. The at least one processor 21, with the at least one memory 22 and the computer program code, is configured to cause the apparatus to perform: receiving at least one user equipment related configuration value from a subscriber data unit (e.g., UDM 1) (S21 in Fig. 2B), receiving at least one network configuration parameter from the subscriber data unit (S22 in Fig. 2B), and manipulating the at least one user equipment related configuration value based on the at least one network configuration parameter (S23 in Fig. 2B).

Thus, in this way a subscriber mobility control unit, such as an AMF or an MME, obtains enough information (in particular at least one network configuration parameter) for manipulating the at least one user equipment related configuration value (e.g., Subscribed Active Time and/or Subscribed Periodic Registration Update Timer) itself. Therefore, when the at least one user equipment related configuration value has to be updated (e.g., after expiry of a validity period of the network configuration parameter), it can manipulate (re-calculate) the at least one user equipment related configuration value. Thus, the subscriber data unit, such as a UMD or HSS, can abstain from re-calculating the at least one user equipment related configuration value and sending it again over the network to the subscriber mobility control unit.

Thus, the load on the network (e.g. on reference point N8 between UDM and AMF) is reduced.

The at least one user equipment related configuration value may include at least one non access stratum parameter and/or at least one non access stratum timer. For example, the at least one user equipment related configuration value may include an active time and /or a periodic registration update timer.

Moreover, the at least one network configuration parameter may include a maximum response time and/or a maximum latency.

The UDM 1 (or the corresponding apparatus) and the AMF 2 (or the corresponding apparatus) described above may further include I/O units 13, 23, which are capable of transmitting to and receiving from other network elements.

It is noted that at least one at least one user equipment related configuration value and the at least one network configuration parameter may be sent in one message or in several separate messages from the UDM 1 to AMF 2.

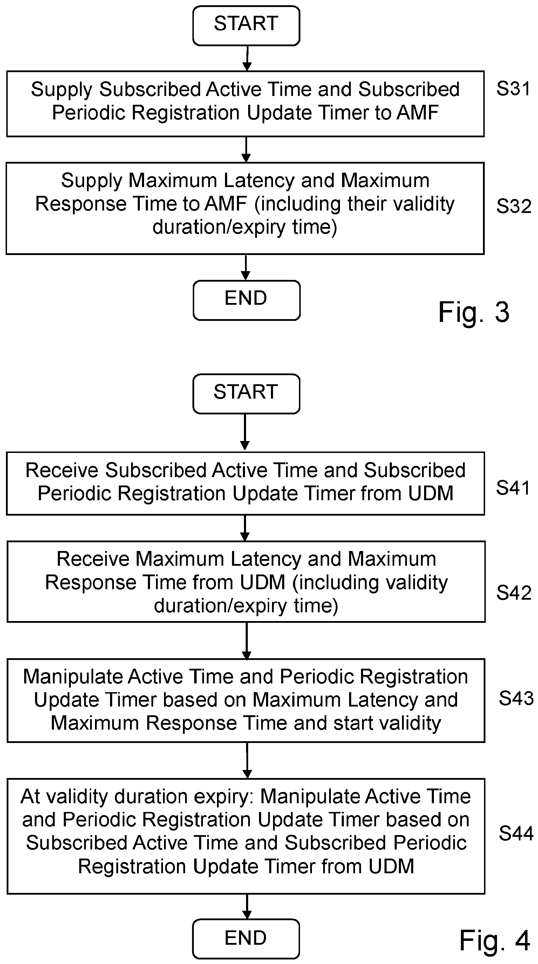

According to a further embodiment, the network configuration parameter (e.g., Maximum Latency and/or Maximum Response Time) may have a validity duration (validity period) or an expiry time. This is considered in the processes shown in Figs. 3 and 4, which correspond to the processes shown in Figs. 1B and 2B, respectively.

Fig. 3 shows a process carried out by the UDM 1 according to this example embodiment. In S31, the UDM 1 supplies the Subscribed Active Time and/or Subscribed Periodic Registration Update Timer (as examples for the at least one user equipment related configuration value) to the AMF 2 (as an example for the subscriber mobility control unit). In S32, the UDM 1 supplies Maximum Latency and Maximum Response time (as examples for the at least one network configuration parameter) to the AMF their validity duration (validity period) or expiry time is included.

Fig. 4 shows the process carried out by the AMF 2 according to this example embodiment. In S41, the AMF 2 receives Subscribed Active Time and/or Subscribed Periodic Registration Update Timer (as examples for the at least one user equipment related configuration value) from the UDM 1 (as an example for the subscriber data unit). In S42, the AMF 2 receives Maximum Latency and Maximum Response time (as examples for the at least one network configuration parameter) from the UDM 1. In S43, the AMF 2 manipulates the Active Time and Periodic Registration Update Timer based on Maximum Latency and Maximum Response Time and starts validity, e.g., starts counting the validity duration.

When the validity duration expires in S44, the AMF 2 manipulates Active Time and Periodic Registration Update Timer based on Subscribed Active Time and Subscribed Periodic Registration Update Timer from UDM 1, e.g., without using the expired network configuration parameters.

In the following, the procedures described above are described in the following by referring to some further detailed embodiments.

In particular, as mentioned above, according to some embodiments, the manipulation of the Subscribed Active Time and Subscribed Periodic Registration Update Timer based on provisioned Network Configuration parameters (Maximum Latency, Maximum Response Time) is moved from the UDM to the AMF. This can be done by letting the UDM to supply the AMF with both the default subscribed parameters as the operator configured them and the provisioned Network Configuration parameters that the AMF needs to fine tune those subscribed parameters to suit the application.

When the validity period of the provisioned network configuration parameters runs out, the AMF can re-calculate new Active Time and Periodic Registration Update Timer values without the provisioned Network Configuration parameters that have just expired. UDM to AMF signalling can be avoided since the AMF has enough information to carry out this task.

According to some embodiments described in the following, the change can be done in a backwards compatible manner.

The UDM 1 may be configured to acquire, from a network entity such as an NRF, information on whether a certain AMF supports the above procedure, i.e., whether it is capable of manipulating the at least one user equipment related configuration value based on the at least one network configuration parameter.

The AMF 2 may be configured to indicate to the UDM during retrieval of configuration information from the UDM (such as access and mobility subscription data) whether it supports the above procedure, e.g., whether it is capable of manipulating the at least one user equipment related configuration value based on the at least one network configuration parameter.

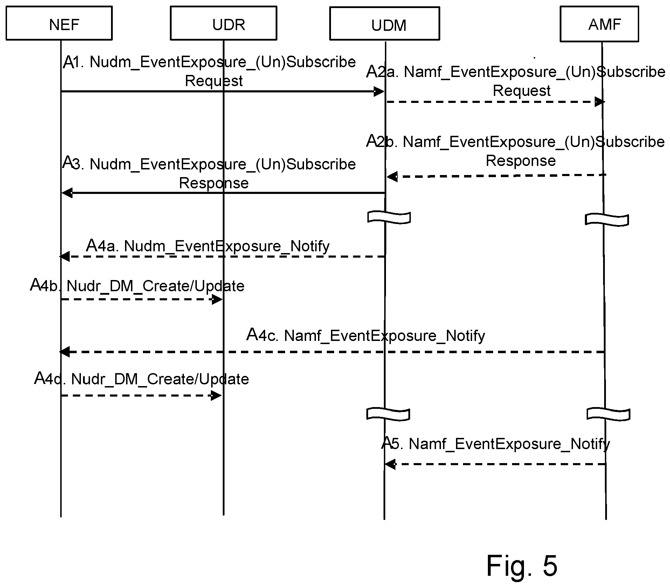

In the following, some measures according to embodiments are described in the following. It is noted that at first, the new measures are described, wherein the detailed procedures are described later by referring to a potential contribution to 3GPP TS 23.502. That is, in particular the call flows shortly described in the following by referring to Figs. 3 and 5 are described later in detail.

It is noted that, even though some embodiments describe 5GS only, the same principle is applicable on EPS and 5GS, since the HSS - MME and UDM - AMF behaviour are similar.

First, parameter provisioning as a part of the monitoring request is described.

Fig. 5 (representing Figure 4.15.3.2.2-1 of 3GPP TS 23.502) illustrates monitoring call flow from TS 23.502 clause 4.15.3.2.2.

The first difference will occur in step 2 as follows: If the UDM has received Maximum Latency or Maximum Response Time or both for the target UE or group of UEs and the AMF supports these parameters, the UDM should include them in the Namf_EventExposure_Subscribe message along with their validity period. In this case, the UDM shall not modify Subscribed Periodic Registration Timer and Subscribed Active Time.

The second difference occurs in step 4: If the AMF has adjusted Periodic Registration Update Timer or Active Time based on Maximum Response Time and Maximum Latency parameters, the AMF shall re-calculate the appropriate timer values based on Subscribed Active Time and Subscribed Periodic Registration Timer without using the expired provisioned Network Configuration parameters. In this case, the UDM is already aware that the AMF can revert back to using the default subscribed values without the UDM sending further subscription data update or notifications to update the affected NAS timer values.

The changes on TS 23.502 clause 4.15.3.2.3 are exactly the same as those above.

Next, parameter provisioning in standalone parameter provisioning procedure is described.

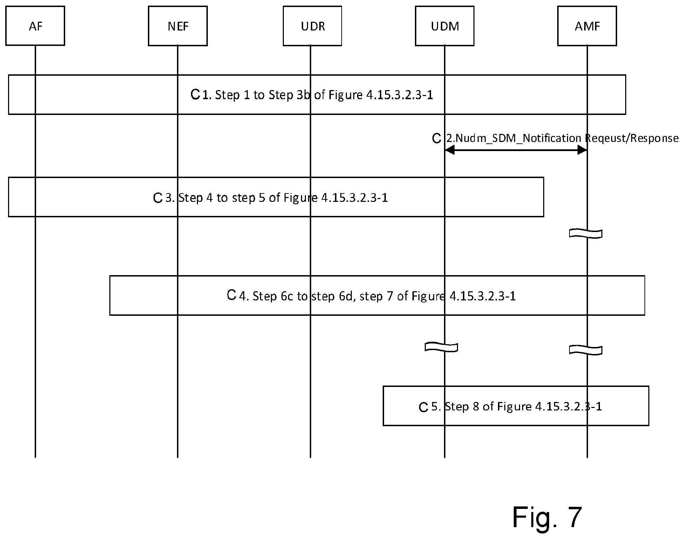

This provisioning call flow in clause 4.15.3.2.3b refers to sections of the monitoring request call flow in clause 4.15.3.2.3 as follows. The call flow is shown in Fig. 7, which represents Figure 4.15.3.2.3b-1 of TS 23.502.

A new measure is described in step 1 as follows, where the UDM includes not only Maximum Response Time that can already be passed to the AMF, but also the Maximum Latency.

The AMF actions arising from the reception of this information are shown in step 2 as follows:
If the UDM is aware that the AMF supports Maximum Response Time and

Maximum Latency Network Configuration Parameters:
- For UE reachability subscription, the UDM should include Maximum Response Time and Maximum Latency Network Configuration parameters in the message along with their validity period, if available. In this case, the UDM need not include unmodified Subscribed Periodic Update Timer and Subscribed Active Time as the AMF already knows them based on subscribed values that remain unchanged.
- If Maximum Response Time is included in the message, the AMF shall use it when setting the Active Time for the UE.
- If Maximum Latency is included in the message, the AMF shall use it when setting the Periodic Registration Timer for the UE.
- If Maximum Response Time expires, the AMF shall re-calculate the Active Time for the UE using the Subscribed Active Time, if available.
- If Maximum Latency expires, the AMF shall re-calculate the Periodic Registration Update Timer for the UE using the Subscribed Periodic Registration Timer, if available.

NOTE 2: This UDM option leaves it up to the AMF to modify the NAS timers used towards the UE by adjusting the subscribed timer value using the provisioned Network Configuration Parameters.

Thus, according to some embodiments, the UDM sends also the "Maximum Latency" parameter in addition to the "Maximum Response Time" parameter to the AMF. When the UDM sends Subscribed Periodic Registration Update Timer or Active Time, it includes the subscribed values of Subscribed Periodic Registration Timer and Subscribed Active Time without modifying the timers.

When receiving the subscribed Periodic Registration Update Timer or subscribed Active Timer along with provisioned "Maximum Response Time" or "Maximum Latency", the AMF takes those into account when determining the actual value of the Periodic Update Timer and Active Timer that it negotiates with the UE.

When the monitoring configuration expires locally in the AMF, the AMF recalculates the appropriate NAS timers (Periodic Registration Update Timer, Active Timer) without the volatile "Maximum Response Time" and "Maximum Latency" that have expired.

The UDM does not need to update these parameters to the AMF when the monitoring configuration expires.

According to a further embodiment, compatibility between AMFs and UDMs which support the above procedures and AMFs and UDMs which do not support the above procedures can be achieved. For example, a mechanism that lets the UDM know whether the AMF supports this procedure may be included. This could be that configuration information of the AMF are available in the network (e.g. in the NRF, see 3GPP TS 29.510) and that the UDM can access this configuration information.

In addition, the AMF can indicate to the UDM during retrieval of Access And Mobility Subscription Data whether it supports the above procedures (see 3GPPTS 29.503 clause 6.1.3.5.3.1). The indication of UDM support is implicit, as the new information included in the subscription from the UDM to the AMF already tells the AMF that it can use this version of the procedure. If the new information elements are not present, then the AMF can keep using the indicated subscribed Periodic Registration Update Timer as before.

In certain embodiments, however, AMF may be configured (e.g., preloaded, upgraded, and the like) with information that one or more AMFs (e.g., all AMFs) can support the new feature.

Since it is possible to provision the Network Configuration Parameters also via dedicated provisioning procedure, the corresponding update is made also in the parameter provisioning procedure.

Thus, it is not necessary for the UDM to update all affected AMFs when the provisioned parameter or configured monitoring event with piggybacked provisioning parameters expires.

Some example embodiments of the invention may be described by the following potential contribution to 3GPP TS 23.502:
^{∗} Begin of a possible contribution according to an example embodiment ^{∗}

In the following, amendments to 4.15.3.2.2: UDM service operations information flow are described.

The procedure is used by the NEF to subscribe to event notifications, to modify group-based subscriptions to event notifications, including removal of certain UEs from a UE group and to explicitly cancel a previous subscription (see clause 4.15.1). Cancelling is done by sending Nudm_EventExposure_Unsubscribe request identifying the subscription to cancel. The notification steps 4 and 5 are not applicable in cancellation case.

It is noted that Fig. 5 represents Figure 4.15.3.2.2-1 of TS 23.502 (as modified herein): Nudm_EventExposure_Subscribe, Unsubscribe and Notify operations.

A1. The NEF subscribes to one or several monitoring events by sending Nudm_EventExposure_Subscribe request. The NEF subscribes to one or several Event(s) (identified by Event ID) and provides the associated notification endpoint of the NEF.

Event Reporting Information defines the type of reporting requested. If the reporting event subscription is authorized by the UDM, the UDM records the association of the event trigger and the requester identity.

The subscription may include Maximum number of reports and/or Maximum duration of reporting IE and optionally MTC Provider Information.

If subscription to group-based event notifications are removed for certain UEs in a group of UEs for which there is an event notification subscription, the NEF provides impacted UE information (e.g. SUPI, MSISDN or External Identity) to UDM via Nudm_EventExposure_Subscribe without cancelling the entire group-based event notification subscription. If the Maximum Number of Reports applies to the event subscription, the NEF sets the stored number of reports of the indicated UE(s) to Maximum Number of Reports.

A2a. [Conditional] Some events, require that UDM sends Namf_EventExposure_Subscribe request to the AMF serving that UE. As the UDM itself is not the Event Receiving NF, the UDM shall additionally provide the notification endpoint of itself besides the notification endpoint of NEF.

Each notification endpoint is associated with the related (set of) Event ID(s). This is to assure the UDM can receive the notification of subscription change related event.

The UDM sends the Namf_EventExposure_Subscribe request to all serving AMF(s) (if subscription applies to a UE or a group of UE(s)), or to all the AMF(s) in the same PLMN as UDM (if subscription applies to any UE). The UDM stores the subscription even if the target UE or group member UE is not registered at the time of subscription.

NOTE 1: If the single target UE, or group member UE, registers later on with an AMF which does not have event subscription or group event subscription(s) for that UE or UE group, then the UDM creates subscriptions to those event(s) with the AMF during the Registration procedure as specified in clause 4.2.2.2.2.

If the subscription applies to a group of UE(s), the UDM shall include the same notification endpoint of itself, i.e. Notification Target Address (+ Notification Correlation Id), in the subscriptions to all UE's serving AMF(s).

NOTE 2: The same notification endpoint of UDM is to help the AMF identify whether the subscription for the requested group event is same or not when a new group member UE is registered.

If Nudm_EventExposure_Subscribe with update is received in step A1 indicating removal of event notification subscription for certain UEs in a group of UEs for which there is an event notification subscription, the UDM provides impacted UE information (e.g. SUPI, MSISDN) to AMF via Namf_EventExposure_Subscribe without cancelling the entire group-based event notification subscription, for the event monitored by AMF.

If the UDM has received Maximum Latency or Maximum Response Time or both for the target UE or group of UEs and the AMF supports these parameters, the UDM should include them in the Namf_EventExposure_Subscribe message along with their validity period. In this case, the UDM shall include unmodified Subscribed Periodic Registration Timer and Subscribed Active Time in the message.

NOTE 3: This UDM option leaves it up to the AMF to modify the NAS timers used towards the UE by adjusting the subscribed timer value using the provisioned Network Configuration Parameters.

A2b. [Conditional] AMF acknowledges the execution of Namf_EventExposure_Subscribe.

A3. UDM acknowledges the execution of Nudm_EventExposure_Subscribe.

If the subscription is applicable to a group of UE(s) and the Maximum number of reports is included in the Event Report information in step A1, the Number of UEs (including all group member UEs irrespective of their registration state) within this group is included in the acknowledgement.

A4a - A4b. [Conditional - depending on the Event] The UDM detects the monitored event occurs and sends the event report, by means of Nudm_EventExposure_Notify message, to the associated notification endpoint of the NEF, along with the time stamp. NEF may store the information in the UDR along with the time stamp using either Nudr_DM_Create or Nudr_DM_Update service operation as appropriate.

If Nudm_EventExposure_Subscribe with update is received in step 2a indicating removal of event notification subscription for certain UEs in a group of UEs for which there is an event notification subscription, the UDM shall cancel the subscription to the event notification for the impacted UEs. If Maximum number of Reports is applied, the UDM shall set the number of reports of the indicated UE(s) to Maximum Number of Reports for the events monitored by UDM.

A4c - A4d. [Conditional - depending on the Event] The AMF detects the monitored event occurs and sends the event report, by means of Namf_EventExposure_Notify message, to the associated notification endpoint of the NEF, along with the time stamp. NEF may store the information in the UDR along with the time stamp using either Nudr_DM_Create or Nudr_DM_Update service operation as appropriate.

If the AMF has a maximum number of reports stored for the UE, the AMF shall decrease its value by one for the reported event.

If Namf_EventExposure_Subscribe with update is received in step A2a indicating removal of event notification subscription for certain UEs in a group of UEs for which there is an event notification subscription, the AMF shall stop the event notifications for the impacted UEs. If Maximum number of Reports is applied, the AMF shall set the number of reports of the indicated UE(s) to Maximum Number of Reports.

For both step A4a and step A4c, when the maximum number of reports is reached and if the subscription is applied to a UE, The NEF unsubscribes the monitoring event(s) to the UDM and the UDM unsubscribes the monitoring event(s) to AMF serving that UE.

For both step A4a and step A4c, when the maximum number of reports is reached for an individual group member UE, the NEF uses the Number of UEs received in step A3 and the Maximum number of reports to determine if reporting for the group is complete. If the NEF determines that reporting for the group is complete, the NEF unsubscribes the monitoring event(s) to the UDM and the UDM unsubscribes the monitoring event(s) to all AMF(s) serving the UEs belonging to that group.

NOTE 4: If an expiry time as specified in clause 6.2.6.2.6 of TS 29.518 is not included in the event subscription, then the life time of the event subscription needs to be controlled by other means as there is no time based cancellation at all even if any group member UEs fail to register.

When the Maximum duration of reporting expires in the NEF, the UDM and the AMF, then each of these nodes shall locally unsubscribe the monitoring event. If the AMF has adjusted Periodic Registration Update Timer or Active Time based on Maximum Response Time and Maximum Latency parameters, the AMF shall re-calculate the appropriate timer values based on Subscribed Active Time and Subscribed Periodic Registration Timer without using the expired provisioned Network Configuration parameters.

A5. [Conditional - depending on the Event] The AMF detects the subscription change related event occurs, e.g. Subscription Correlation ID change due to AMF reallocation or addition of new Subscription Correlation ID due to a new group UE registered, it sends the event report by means of Namf_EventExposure_Notify message to the associated notification endpoint of the UDM.

In the following, a further change in 4.15.3.2.3 of TS: NEF service operations information flow is described.

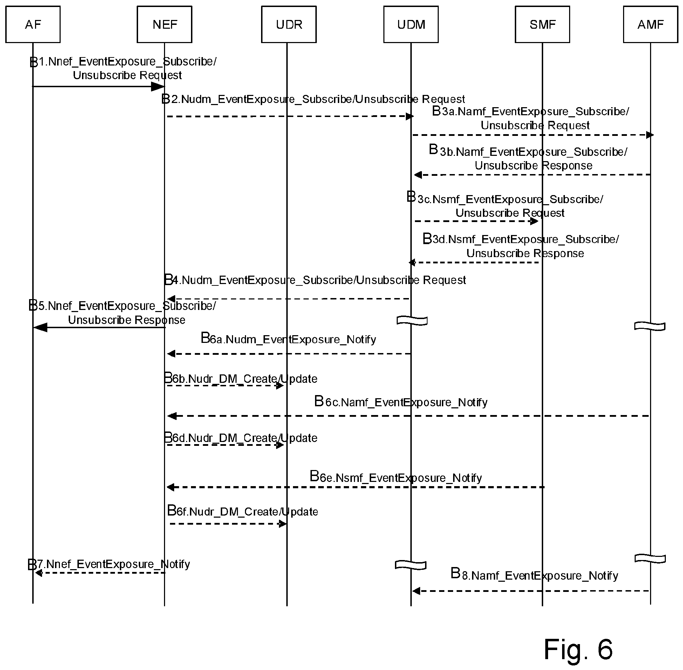

This refers to Fig. 6 representing Figure 4.15.3.2.3-1 (as modified herein): Nnef_EventExposure_Subscribe, Unsubscribe and Notify operations.

The procedure is used by the AF to subscribe to event notifications, to modify group-based subscriptions to event notification and to explicitly cancel a previous subscription (see clause 4.15.1). Cancelling is done by sending Nnef_EventExposure_Unsubscribe request identifying the subscription to cancel with Subscription Correlation ID. The notification steps 6 to 8 are not applicable in cancellation case.

B1. The AF subscribes to one or several Event(s) (identified by Event ID) and provides the associated notification endpoint of the AF by sending Nnef_EventExposure_Subscribe request.

Event Reporting Information defines the type of reporting requested (e.g. one-time reporting, periodic reporting or event based reporting, for Monitoring Events). If the reporting event subscription is authorized by the NEF, the NEF records the association of the event trigger and the requester identity. The subscription may also include Maximum number of reports and/or Maximum duration of reporting IE and optionally MTC Provider Information.

If subscription to group-based event notifications are removed for certain UEs in a group of UEs for which there is an event notification subscription, the AF provides impacted UE information (e.g. SUPI, MSISDN or External Identity) to NEF via Nnef_EventExposure_Subscribe without cancelling the entire group-based event notification subscription.

B2. [Conditional - depending on authorization in step B1] The NEF subscribes to received Event(s) (identified by Event ID) and provides the associated notification endpoint of the NEF to UDM by sending Nudm_EventExposure_Subscribe request. The NEF maps the AF-Identifier into DNN and S-NSSAI combination based on local configuration, and include DNN, S-NSSAI in the request.

If the reporting event subscription is authorized by the UDM, the UDM records the association of the event trigger and the requester identity. Otherwise, the UDM continues in step B4 indicating failure.

If Nnef_EventExposure_Subscribe with update is received in step B1 indicating removal of event notification subscription for certain UEs in a group of UEs for which there is an event notification subscription, the NEF provides impacted UE information (e.g. SUPI, MSISDN or External Identity) to UDM via Nudm_EventExposure_Subscribe without cancelling the entire group-based event notification subscription. If the Maximum Number of Reports applies to the event subscription, the NEF sets the stored number of reports of the indicated UE(s) to Maximum Number of Reports.

B3a. [Conditional] If the requested event (e.g. monitoring of Loss of Connectivity) requires AMF assistance, then the UDM sends the Namf_EventExposure_Subscribe to the AMF serving the requested user. The UDM sends the Namf_EventExposure_Subscribe request to the all serving AMF(s) (if subscription applies to a UE or a group of UE(s)), or all the AMF in the same PLMN as the UDM (if subscription applies to any UE).

NOTE 1: If the UE, which is a member of a group, registers with an AMF which does not have group event subscription(s) for that group, then the UDM creates subscriptions to those event(s) with the AMF during the Registration procedure in clause 4.2.2.2.2.

As the UDM itself is not the Event Receiving NF, the UDM shall additionally provide the notification endpoint of itself besides the notification endpoint of NEF. Each notification endpoint is associated with the related (set of) Event ID(s). This is to assure the UDM can receive the notification of subscription change related event.

If the subscription applies to a group of UE(s), the UDM shall include the same notification endpoint of itself, i.e. Notification Target Address (+ Notification Correlation Id), in the subscriptions to all UE's serving AMF(s).

NOTE 2: The same notification endpoint of UDM is to help the AMF identify whether the subscription for the requested group event is same or not when a new group member UE is registered.

If Nudm_EventExposure_Subscribe with update is received in step B2 indicating removal of event notification subscription for certain UEs in a group of UEs for which there is an event notification subscription, the UDM provides impacted UE information (e.g. SUPI, MSISDN) to AMF via Namf_EventExposure_Subscribe without cancelling the entire group-based event notification subscription, for the event monitored by AMF.

If the UDM has received Maximum Latency or Maximum Response Time or both for the target UE or group of UEs and the AMF supports these parameters, the UDM should include them in the Namf_EventExposure_Subscribe message along with their validity period, if any. In this case, the UDM shall include unmodified Subscribed Periodic Registration Timer and Subscribed Active Time in the message.

NOTE 3: This UDM option leaves it up to the AMF to modify the NAS timers used towards the UE by adjusting the subscribed timer value using the provisioned Network Configuration Parameters.

B3b. [Conditional] AMF acknowledges the execution of Namf_EventExposure_Subscribe.

B3c. [Conditional] If the requested event (e.g. PDU Session Status) requires SMF assistance, then the UDM sends the Nsmf_EventExposure_Subscribe Request message to each SMF where at least one UE identified in step B2 has a PDU session established. The NEF notification endpoint received in step B2 is included in the message.

NOTE 4: In the home routed case, the UDM sends the subscription to the V-SMF via the H-SMF.

B3d. [Conditional] The SMF acknowledges the execution of Nsmf_EventExposu re_Subscribe.

B4. [Conditional] UDM acknowledges the execution of Nudm_EventExposure_Subscribe.

If the subscription is applicable to a group of UE(s) and the Maximum number of reports is included in the Event Report information in step 1, the Number of UEs (including all group member UEs irrespective of their registration state) is included in the acknowledgement.

B5. NEF acknowledges the execution of Nnef_EventExposure_Subscribe to the requester that initiated the request.

B6a - B6b. [Conditional - depending on the Event] The UDM (depending on the Event) detects the event occurs and sends the event report, by means of Nudm_EventExposure_Notify message to the associated notification endpoint of the NEF along with the time stamp. NEF may store the information in the UDR along with the time stamp using either Nudr_DM_Create or Nudr_DM_Update service operation as appropriate.

If Nudm_EventExposure_Subscribe with update is received in step B2 indicating removal of event notification subscription for certain UEs in a group of UEs for which there is an event notification subscription, the UDM shall cancel the subscription to the event notification for the impacted UEs. If Maximum number of Reports is applied, the UDM shall set the number of reports of the indicated UE(s) to Maximum Number of Reports for the events monitored by UDM.

B6c - B6d. [Conditional - depending on the Event] The AMF detects the event occurs and sends the event report, by means of Namf_EventExposure_Notify message to associated notification endpoint of the NEF along with the time stamp. NEF may store the information in the UDR along with the time stamp using either Nudr_DM_Create or Nudr_DM_Update service operation as appropriate.

If the AMF has a maximum number of reports stored for the UE or the individual member UE, the AMF shall decrease its value by one for the reported event.

If Namf_EventExposure_Subscribe with update is received in step B3a indicating removal of event notification subscription for certain UEs in a group of UEs for which there is an event notification subscription, the AMF shall stop the event notification for the impacted UEs. If Maximum number of Reports is applied, the AMF shall set the number of reports of the indicated UE(s) to Maximum Number of Reports.

For both step B6a and step B6c, when the maximum number of reports is reached and if the subscription is applied to a UE, The NEF unsubscribes the monitoring event(s) to the UDM and the UDM unsubscribes the monitoring event(s) to AMF serving for that UE.

For both step B6a and step B6c, when the maximum number of reports is reached for an individual group member UE, the NEF uses the Number of UEs received in step B4 and the Maximum number of reports to determine if reporting for the group is complete. If the NEF determines that reporting for the group is complete, the NEF unsubscribes the monitoring event(s) to the UDM and the UDM unsubscribes the monitoring event(s) to all AMF(s) serving the UEs belonging to that group.

NOTE 5: If an expiry time as specified in clause 6.2.6.2.6 of TS 29.518 is not included in the event subscription, then the life time of the event subscription needs to be controlled by other means as there is no time based cancellation at all even if any group member UEs fail to register.

When the Maximum duration of reporting expires in the NEF, the UDM and the AMF, then each of these nodes shall locally unsubscribe the monitoring event. If the AMF has adjusted Periodic Registration Update Timer or Active Time based on Maximum Response Time and Maximum Latency parameters, the AMF shall re-calculate the appropriate timer values based on Subscribed Active Time and Subscribed Periodic Registration Timer without using the expired provisioned Network Configuration parameters.

B6e - B6f. [Conditional - depending on the Event] When the SMF detects a subscribed event, the SMF sends the event report, by means of Nsmf_EventExposure_Notify message, to the associated notification endpoint of the NEF provided in step B3c. NEF may store the information in the UDR along with the time stamp using either Nudr_DM_Create or Nudr_DM_Update service operation as appropriate.

B7. [Conditional - depending on the Event in steps 6a-6f] The NEF forwards to the AF the reporting event received by either Nudm_EventExposure_Notify and/or Namf_EventExposure_Notify. In the case of the PDU Session Status event, the NEF maps it to an PDN Connectivity Status notification when reporting to the AF.

B8. [Conditional - depending on the Event] The AMF detects the subscription change related event occurs, e.g. Subscription Correlation ID change due to AMF reallocation or addition of new Subscription Correlation ID due to a new group UE registered, it sends the event report, by means of Namf_EventExposure_Notify message to the associated notification endpoint of the UDM.

In the following, an amendment to 4.15.3.2.3b: Specific NEF service operations information flow for loss of connectivity and UE reachability is described.

This refers to Fig. 7, representing Figure 4.15.3.2.3b-1 of TS 23.502 (as modified herein).

The procedure is used by the AF to subscribe to notifications and to explicitly cancel a previous subscription for loss of connectivity and UE reachability.

C1. Step B1 to step B3b of Fig. 6 (Figure 4.15.3.2.3-1 of TS 23.502) are performed with the following differences:
- For Loss of Connectivity, the subscription request may include Maximum Detection Time (see Table 4.15.3.1-1).
- For UE reachability, the subscription request may include Maximum Latency, Maximum Response Time and/or Suggested number of downlink packets (see Table 4.15.3.1-1). In step B3a of Fig. 6 (Figure 4.15.3.2.3-1 of TS 23.502), the UDM may include Maximum Response Time or Maximum Latency or both in the subscription request to the AMF.

NOTE 1: It is expected that Maximum Latency, Maximum Response Time and/or Suggested number of downlink packets included in the subscription request is only used by the AF that does not support Parameter Provisioning procedure specified in clause 4.15.6.3a.

C2. [Conditional] If the subscribed periodic registration timer has not been set according to any subscription request, or a Network Configuration as defined in clause 4.15.6.3a is received and the AMF does not support the Network Configuration Parameters, the UDM and the AMF shall proceed as follows:
- set the subscribed periodic registration timer using the Maximum Detection Time or Maximum Latency; otherwise if the subscribed periodic registration timer was previously set by a different subscription identified by a different Notification Target Address (+ Notification Correlation ID), or set by a different Network Configuration identified by a different NEF reference ID for the same UE, and if the newly received Maximum Detection Time or Maximum Latency is lower than the provided subscribed periodic registration timer, the UDM shall set the subscribed periodic registration timer using the newly received Maximum Detection Time or Maximum Latency.
- If Nudm_EventExposure_Unsubscribe request is performed in step 1, the UDM shall recalculate the subscribed periodic registration timer based on the remaining event subscriptions and/or Network Configurations.
- In addition for UE reachability subscription, if the newly received Maximum Response Time is longer than the provided subscribed Active Time (i.e. previously provided Maximum Response Time), the UDM shall set the subscribed Active Time using the newly received Maximum Response Time. If the suggested number of downlink packets is newly received, the UDM shall add the newly received suggested number of downlink packets to the currently used value of suggested number of downlink packets if the aggregated value is within the operator defined range.
- If Nudm_EventExposure_Unsubscribe request is performed in step 1, the UDM shall recalculate the subscribed Active Time and/or Suggested Number of Downlink Packets based on the remaining event subscriptions and/or Network Configurations.
- If the subscribed periodic registration timer or the subscribed Active Time are set or modified, the UDM sends the Nudm_SDM_Notification request to related serving AMF(s). If the AMF receives a subscribed periodic registration timer value from the UDM, it allocates the received value to the UE as the periodic registration timer at subsequent Registration procedure. The AMF starts monitoring of the expiration of the mobile reachable timer for Loss of Connectivity (if required) and starts monitoring of the UE entering connected mode for UE reachability (if required).

If the UDM is aware that the AMF supports Maximum Response Time and Maximum Latency Network Configuration Parameters:
- For UE reachability subscription, the UDM should include Maximum Response Time and Maximum Latency Network Configuration parameters in the message along with their validity period, if available. In this case, the UDM shall include unmodified Subscribed Periodic Update Timer and Subscribed Active Time.
- If Maximum Response Time is included in the message, the AMF shall use it when setting the Active Time for the UE.
- If Maximum Latency is included in the message, the AMF shall use it when setting the Periodic Registration Timer for the UE.
- If Maximum Response Time expires, the AMF shall re-calculate the Active Time for the UE using the Subscribed Active Time, if available.
- If Maximum Latency expires, the AMF shall re-calculate the Periodic Registration Update Timer for the UE using the Subscribed Periodic Registration Timer, if available.

NOTE 2: This UDM option leaves it up to the AMF to modify the NAS timers used towards the UE by adjusting the subscribed timer value using the provisioned Network Configuration Parameters.

If the suggested number of downlink packets are set or modified, the UDM sends the Nudm_SDM_Notification request to related serving SMF(s). The SMF configures the data buffer at the SMF/UPF according the suggested number of downlink packets.

If the provided value is updated by the UDM, the UDM may notify the NEF (which then notifies the AF) of the actual value that is being applied in the 3GPP network.

C3. Step B4 to step B5 of Fig. 6 (Figure 4.15.3.2.3-1 of TS 23.502) are performed.

C4. Step B6c to step B6d of Fig. 6 (Figure 4.15.3.2.3-1 of TS 23.502) are performed with the following differences:
- For Loss of Connectivity, the event is detected when the mobile reachability timer expires.
- For UE reachability, the event is detected when the UE changes to connected mode or when the UE will become reachable for paging.

C5. Step B8 of Fig. 6 (Figure 4.15.3.2.3-1 of TS 23.502) is performed.

In the following, amendments to 4.15.6.2: NEF service operations information flow are described.

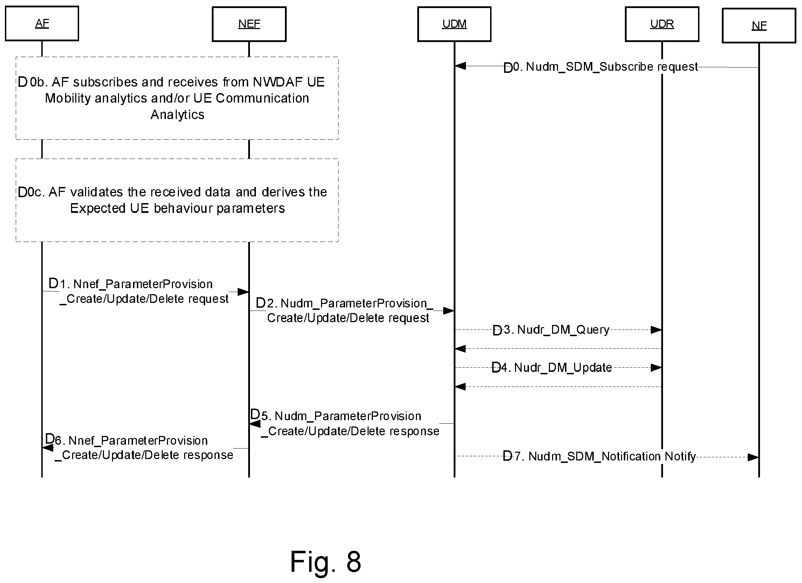

This refers to Fig. 8 representing Figure 4.15.6.2-1 of TS 23.502 (as modified herein).

D0. NF subscribes to UDM notifications of UE and/or Group Subscription data updates.

NOTE 1: The NF can subscribe to Group Subscription data from UDM in this step and be notified of Group Subscription data updates in step D7 using the Shared Data feature defined in TS 29.503 [52].

D0b. [Conditional, on using NWDAF-assisted values] The AF may subscribe to NWDAF via NEF in order to learn the UE mobility analytics and/or UE Communication analytics for a UE or group of UEs by applying the procedure specified in clause 6.1.1.2 of TS 23.288 . The Analytics Id is set to any of the values specified in clause 6.7.1 of TS 23.288 .

D0c. [Conditional, on using NWDAF-assisted values] AF validates the received data and derives any of the Expected UE behaviour parameters defined in clause 4.15.6.3 for a UE or group of UEs.

D1. The AF provides one or more parameter(s) to be created or updated in a Nnef_ParameterProvision_Create or Nnef_ParameterProvision_Update or Nnef_ParameterProvision_Delete Request to the NEF.

The GPSI identifies the UE and the Transaction Reference ID identifies the transaction request between NEF and AF. For the case of Nnef_ParameterProvision_Create, The NEF assigns a Transaction Reference ID to the Nnef_ParameterProvision_Create request.

NEF checks whether the requestor is allowed to perform the requested service operation by checking requestor's identifier (i.e. AF ID).

For a Create request associated with a 5G VN group, the External Group ID identifies the 5G VN Group.

The payload of the Nnef_ParameterProvision_Update Request includes one or more of the following parameters:
- Expected UE Behaviour parameters (see clause 4.15.6.3); or
- Network Configuration parameters (see clause 4.15.6.3a); or
- External Group Id and 5G VN group data (i.e. 5G-VN configuration parameters) (see clause 4.15.6.3b), or
- 5G VN group membership management parameters (see clause 4.15.6.3c); or
- Location Privacy Indication parameters of the "LCS privacy" Data Subset of the Subscription Data (see clause 5.2.3.3.1 and clause 7.1 of TS 23.273); or
- MTC Provider Information;
- AF provided ECS Address Configuration Information (see clause 4.15.6.3d).

The AF may request to delete 5G VN configuration by sending Nnef_ParameterProvision_Delete to the NEF.

D2. If the AF is authorised by the NEF to provision the parameters, the NEF requests to create, update and store, or delete the provisioned parameters as part of the subscriber data via Nudm_ParameterProvision_Create, Nudm_ParameterProvision_Update or Nudm_ParameterProvision_Delete Request message, the message includes the provisioned data and NEF reference ID and optionally MTC Provider Information.

If the AF is not authorised to provision the parameters, then the NEF continues in step 6 indicating the reason to failure in Nnef_ParameterProvision_Create/Update/Delete Response message. Step D7 does not apply in this case.

If the NEF did not receive DNN and/or S-NSSAI from the AF and such information is configured as needed within 5GC, the NEF determines the DNN and/or S-NSSAI from the AF identifier.

If the NEF receives AF provided ECS Address Configuration Information with Spatial Validity Condition referring to a geographical area, the NEF translates the Spatial Validity Condition into one of a Presence Reporting Area.

NOTE 2: For non-roaming case and no authorisation or validation by the UDM required and if the request is not associated with a 5G VN group, the NEF can directly forward the external parameter to the UDR via Nudr_DM_Update Request message. And in this case, the UDR responds to NEF via Nudr_DM_Update Response message.

D3. UDM may read from UDR, by means of Nudr_DM_Query, corresponding subscription information in order to validate required data updates and authorize these changes for this subscriber or Group for the corresponding AF.

D4. If the AF is authorised by the UDM to provision the parameters for this subscriber, the UDM resolves the GPSI to SUPI, and requests to create, update or delete the provisioned parameters as part of the subscriber data via Nudr_DM_Create/Update/Delete Request message, the message includes the provisioned data.

If a new 5G VN group is created, the UDM shall assign a unique Internal Group ID for the 5G VN group and include the newly assigned Internal Group ID in the Nudr_DM_Create Request message. If the list of 5G VN group members is changed or if 5G VN group data has changed, the UDM updates the UE and/or Group subscription data according to the AF/NEF request.

UDR stores the provisioned data as part of the UE and/or Group subscription data and responds with Nudr_DM_Create/Update/Delete Response message.

When the 5G VN group data (as described in clause 4.15.6.3b) is updated, the UDR notifies to the subscribed PCF by sending Nudr_DM_Notify as defined in clause 4.16.12.2.

If the AF is not authorised to provision the parameters, then the UDM continues in step 5 indicating the reason to failure in Nudm_ParameterProvision_Update Response message and step 7 is not executed.

The UDM classifies the received parameters (i.e. Expected UE Behaviour parameters or Suggested Number of Downlink Packets or the 5G VN configuration parameters or Location Privacy Indication parameters or ECS Address Configuration Information), into AMF associated and SMF associated parameters. The UDM may use the AF ID received from the NEF in step D2 to relate the received parameter with a particular subscribed DNN and/or S-NSSAI. The UDM stores the SMF-Associated parameters under corresponding Session Management Subscription data type.

Each parameter or parameter set may be associated with a validity time. The validity time is stored at the UDM/UDR and in each of the NFs, to which parameters are provisioned (e.g. in AMF or SMF). Upon expiration of the validity time, each node deletes the parameters autonomously without explicit signalling.

D5. UDM responds the request with Nudm_ParameterProvision_Create/Update/Delete Response. If the procedure failed, the cause value indicates the reason.

D6. NEF responds the request with Nnef_ParameterProvision_Create/Update/Delete Response. If the procedure failed, the cause value indicates the reason.

D7. [Conditional this step occurs only after successful step D4] UDM notifies the subscribed Network Function (e.g., AMF) of the updated UE and/or Group subscription data via Nudm_SDM_Notification Notify message.
a) If the NF is AMF, the UDM performs Nudm_SDM_Notification (SUPI or Internal Group Identifier, AMF-Associated Expected UE Behaviour parameters, Subscribed Periodic Registration Timer, subscribed Active Time, etc.) service operation. The AMF identifies whether there are overlapping parameter set(s) and merges the parameter set(s) in the Expected UE Behaviour, if necessary. The AMF uses the received parameters to derive the appropriate UE configuration of the NAS parameters and to derive Core Network assisted RAN parameters. The AMF may determine a Registration area based on parameters Stationary indication or Expected UE Moving Trajectory. If Maximum Response Time was included, the AMF adjusts the Active Time using the Maximum Response Time. If Maximum Latency was included, the AMF adjusts the Periodic Registration Timer using the Maximum Latency.
b) If the NF is SMF, the UDM performs Nudm_SDM_Notification (SUPI or Internal Group Identifier, SMF-Associated Expected UE Behaviour parameter set, DNN/S-NSSAI, Suggested Number of Downlink Packets, etc.) service operation.

The SMF stores the received parameters and associates them with a PDU Session based on the DNN and S-NSSAI included in the message from UDM.

The SMF identifies whether there are overlapping parameter set(s) in the Expected UE behaviour and merges the parameter set(s), if necessary. The SMF may use the parameters as follows:
- SMF configures the UPF accordingly. The SMF can use the Scheduled Communication Type parameter or Suggested Number of Downlink Packets parameter to configure the UPF with how many downlink packets to buffer. The SMF may use the parameter Communication duration time to determine to deactivate UP connection and to perform CN-initiated selective deactivation of UP connection of an existing PDU Session.
- The SMF may derive SMF derived CN assisted RAN information for the PDU Session. The SMF provides the SMF derived CN assisted RAN information to the AMF as described in PDU Session establishment procedure or PDU Session modification procedure.

NOTE 3: The NEF (in NOTE 1) or the UDM (in step D3) can also update the corresponding UDR data via Nudr_DM_Create/Delete as appropriate.

NOTE 4: The change of AF provided ECS configuration information is not meant to apply immediately: the UDM interface to the SMF can refer to Shared Data for the Subscription provided ECS configuration information. When such Shared Data has changed for many UE(s) the SMF should apply procedures avoiding peaks of signalling traffic in the network related with the change of Subscription provided ECS configuration information.

In the following, amendments to 5.2.3.3.1: General are described.

In particular, here subscription data types used in the Nudm_SubscriberDataManagement Service are defined in Table 5.2.3.3.1-1. In this table the following Note 13 is added to the entries "Subscribed Periodic Registration Timer" and "Subscribed Active Time":

NOTE 13: If the AMF indicates its capability to use Maximum Response Time and Maximum Latency parameters to adjust Subscribed Periodic Registration Timer and Subscribed Active Time, then the UDM shall include unmodified Subscribed Periodic Registration Timer and Subscribed Active Time values.
^{∗} End of the possible contribution according to an example embodiment ^{∗}

The above-described example embodiments are only examples and may be modified.

In particular, several embodiments described above are applied for 5GS. However, the procedures are applicable for other kinds of network as well. As mentioned above, in case of EPS, HSS and MME correspond to UDM and AMF, respectively.

Names of network elements, protocols, and methods are based on current standards. In other versions or other technologies, the names of these network elements and/or protocols and/or methods may be different, as long as they provide a corresponding functionality.

In general, the example embodiments may be implemented by computer software stored in the memory (memory resources, memory circuitry) 12, 22, and executable by the processor (processing resources, processing circuitry) 11, 21 or by hardware, or by a combination of software and/or firmware and hardware.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The memory (memory resources, memory circuitry) 12, 22 may be of any type suitable to the local technical environment and may be implemented using any suitable data storage technology, such as semiconductor based memory devices, magnetic memory devices and systems, optical memory devices and systems, fixed memory and removable memory, and non-transitory computer-readable media. The processor (processing resources, processing circuitry) 11, 21 may be of any type suitable to the local technical environment, and may include one or more of general purpose computers, special purpose computers, microprocessors, digital signal processors (DSPs) and processors based on a multi core processor architecture, as non-limiting examples.

According to at least some example embodiments, an apparatus, in a subscriber data unit, is provided, the apparatus comprising: at least one processor and at least one memory including computer program code, the at least one memory and the computer program code configured to, with the at least one processor, cause the apparatus at least to perform: supplying at least one user equipment related configuration value to a subscriber mobility control unit, and supplying at least one network configuration parameter to the subscriber mobility control unit, wherein the at least one network configuration parameter is applied for manipulating the at least one user equipment related configuration value.

According to at least some example embodiments, the at least one memory and the computer program code are configured to, with the at least one processor, cause the apparatus to further perform: determining whether the subscriber mobility control unit is capable of manipulating the at least one user equipment related configuration value, and supplying the at least one network configuration parameter to the subscriber mobility control unit in case it is determined that the subscriber mobility control unit is capable of manipulating the at least one user equipment related configuration value.

According to at least some example embodiments, the at least one memory and the computer program code are configured to, with the at least one processor, cause the apparatus to further perform in case it is determined that the subscriber mobility control unit is not capable of manipulating the at least one user equipment related configuration value: manipulating the at least one user equipment related configuration value based on the at least one network configuration parameter, sending the manipulated at least one user equipment related configuration value to the subscriber mobility control unit, and sending, after expiry of a validity period for the at least one network control parameter, an updated value of the at least one user equipment related configuration value to the subscriber mobility control unit.

According to at least some example embodiments, the at least one memory and the computer program code are configured to, with the at least one processor, cause the apparatus to further perform: determining whether the subscriber mobility control unit is capable of manipulating the at least one user equipment related configuration value by referring to configuration information received from the subscriber mobility control unit.

According to at least some example embodiments, an apparatus, in a subscriber mobility control unit, is provided, the apparatus comprising: at least one processor and at least one memory including computer program code, the at least one memory and the computer program code configured to, with the at least one processor, cause the apparatus at least to perform: receiving at least one user equipment related configuration value from a subscriber data unit, receiving at least one network configuration parameter from the subscriber data unit, and manipulating the at least one user equipment related configuration value based on the at least one network configuration parameter.

According to at least some example embodiments, the at least one network configuration parameter comprises a validity period, and the at least one memory and the computer program code are configured to, with the at least one processor, cause the apparatus to further perform: manipulating the at least one user equipment related configuration value without using the received at least one network configuration parameter after expiry of the validity period.

According to at least some example embodiments, the at least one user equipment related configuration value comprises at least one non access stratum parameter.

According to at least some example embodiments, the at least one user equipment related configuration value comprises at least one non access stratum timer.

According to at least some example embodiments, the at least one user equipment related configuration value comprises an active time and /or a periodic registration update timer.

According to at least some example embodiments, the at least one network configuration parameter comprises a maximum response time and/or a maximum latency.

It is to be understood that the example embodiments described above are illustrative and are not to be construed as limiting. Various modifications and applications may occur to those skilled in the art without departing from the true spirit and scope of the example embodiments.

## Claims

1. An apparatus, in a subscriber data unit, comprising:
means for supplying at least one user equipment related configuration value to a subscriber mobility control unit, and
means for supplying at least one network configuration parameter to the subscriber mobility control unit, wherein the at least one network configuration parameter is applied for manipulating the at least one user equipment related configuration value.

2. The apparatus according to claim 1, further comprising:
means for determining whether the subscriber mobility control unit is capable of manipulating the at least one user equipment related configuration value, and
means for supplying the at least one network configuration parameter to the subscriber mobility control unit in case it is determined that the subscriber mobility control unit is capable of manipulating the at least one user equipment related configuration value.

3. The apparatus according to claim 2, further comprising:
means for manipulating the at least one user equipment related configuration value based on the at least one network configuration parameter, in case it is determined that the subscriber mobility control unit is not capable of manipulating the at least one user equipment related configuration value
means for sending the manipulated at least one user equipment related configuration value to the subscriber mobility control unit, and
means for sending, after expiry of a validity period for the at least one network control parameter, an updated value of the at least one user equipment related configuration value to the subscriber mobility control unit.

4. The apparatus according to claim 2 or 3, further comprising:
means for determining whether the subscriber mobility control unit is capable of manipulating the at least one user equipment related configuration value by referring to configuration information received from the subscriber mobility control unit.

5. An apparatus, in a subscriber mobility control unit, comprising:
means for receiving at least one user equipment related configuration value from a subscriber data unit,
means for receiving at least one network configuration parameter from the subscriber data unit, and
means for manipulating the at least one user equipment related configuration value based on the at least one network configuration parameter.

6. The apparatus according to claim 5, wherein the at least one network configuration parameter comprises a validity period, and the apparatus further comprises:
means for manipulating the at least one user equipment related configuration value without using the received at least one network configuration parameter after expiry of the validity period.

7. The apparatus according to any one of the claims 1 to 6, wherein the at least one user equipment related configuration value comprises at least one non access stratum parameter and/or at least one non access stratum timer.

8. The apparatus according to any one of the claims 1 to 7, wherein
the at least one user equipment related configuration value comprises an active time and /or a periodic registration update timer, and/or
the at least one network configuration parameter comprises a maximum response time and/or a maximum latency.

9. A method, in a subscriber data unit, comprising:
supplying at least one user equipment related configuration value to a subscriber mobility control unit, and
supplying at least one network configuration parameter to the subscriber mobility control unit, wherein the at least one network configuration parameter is applied for manipulating the at least one user equipment related configuration value.

10. The method according to claim 8, further comprising:
means for determining whether the subscriber mobility control unit is capable of manipulating the at least one user equipment related configuration value, and
supplying the at least one network configuration parameter to the subscriber mobility control unit in case it is determined that the subscriber mobility control unit is capable of manipulating the at least one user equipment related configuration value.

11. The method according to claim 10, further comprising, in case it is determined that the subscriber mobility control unit is not capable of manipulating the at least one user equipment related configuration value:
manipulating the at least one user equipment related configuration value based on the at least one network configuration parameter,
sending the manipulated at least one user equipment related configuration value to the subscriber mobility control unit, and
sending, after expiry of a validity period for the at least one network control parameter, an updated value of the at least one user equipment related configuration value to the subscriber mobility control unit.

12. The method according to claim 10 or 11, further comprising:
determining whether the subscriber mobility control unit is capable of manipulating the at least one user equipment related configuration value by referring to configuration information received from the subscriber mobility control unit.

13. A method, in a subscriber mobility control unit, comprising:
receiving at least one user equipment related configuration value from a subscriber data unit,
receiving at least one network configuration parameter from the subscriber data unit, and
manipulating the at least one user equipment related configuration value based on the at least one network configuration parameter.

14. The method according to claim 13, wherein the at least one network configuration parameter comprises a validity period, and the method further comprises:
manipulating the at least one user equipment related configuration value without using the received at least one network configuration parameter after expiry of the validity period.

15. The method according to any one of the claims 9 to 14, wherein the at least one user equipment related configuration value comprises at least one non access stratum parameter and/or at least one non access stratum timer.

16. The apparatus according to any one of the claims 9 to 15, wherein
the at least one user equipment related configuration value comprises an active time and /or a periodic registration update timer, and/or.
the at least one network configuration parameter comprises a maximum response time and/or a maximum latency.

17. A computer program product comprising code means for performing a method according to any one of the claims 9 to 16 when run on a processing means or module.

18. The computer program product according to claim 17, wherein the computer program product is embodied on a computer-readable medium, and/or the computer program product is directly loadable into the internal memory of the computer and/or transmittable via a network by means of at least one of upload, download and push procedures.
